# EUROPEAN PATENT APPLICATION

(11) **EP 3 960 348 A1**
(43) Date of publication of application: **02.03.2022**
(21) Application number: 20193754.7
(22) Date of filing: 31.08.2020
(51) Int. Cl.: B23H 3/10, B23H 9/16

(54) **A DEVICE AND METHOD FOR ELECTROCHEMICALLY MACHINING A WORKPIECE**

(71) Applicant: Blueacre Technology Limited, Dundalk Co. Louth (IE)
(72) Inventor: Kendall, Thomas, Manchester (GB); Gillen, David, Carlingford, Co. Louth (IE)
(74) Representative: Tomkins & Co

(57) **Abstract**

A device for electrochemically machining a workpiece (10), the device comprising:
(i) an elongate device body having a first (3) end and a second (4) end and an electrically insulating sidewall (8) with one or more electrolyte delivery apertures defined in the elongate device body;
(ii) an electrode (7) within the device body;
(iii) an electrolyte supply arrangement that confines electrolyte within the device body so that the electrolyte can only be delivered through the aperture(s) for electrochemically machining the workpiece (10). Also described is a method for electrochemically machining the machine.

## Description

### Field of the Invention

The present invention relates to a device and method for electrochemically machining a workpiece.

### Background to the Invention

Devices and methods for electrochemically machining a workpiece are known. The principle of exposing a workpiece to an electrolyte in an electrochemical cell type arrangement has been used. The concept is that electrolyte is exposed to a workpiece in an arrangement where there is in effect an electrochemical cell. Positive and negative electrodes are provided and the exposure to electrolyte can result in the machining of the workpiece where it is contacted with electrolyte. Jet electrochemical machining (Jet-ECM) is a non-contact machining method/device in which a free jet of electrolyte locally removes material from an electrically conductive workpiece via the process of anodic dissolution. In Jet-ECM it is only where the jet of electrolyte impinges on the surface that machining occurs. The jet of electrolyte is caused by a pump providing pressure, forcing the electrolyte out of a nozzle. It is therefore an accurate methodology as there is machining only under the jet.

US Patent Publication No. 2019/0154383 describes a method for producing riflings in barrels of guns. US Patent Publication No. 2019/0111507 describes an electrochemical machining system which does not use Jet-ECM but instead floods the workpiece being machined with electrolyte. A series of mechanical spacers prevent the conductive wire (acting as an electrode) touching the workpiece and causing a short.

Notwithstanding the foregoing it is desirable to provide alternative devices/methods for electrochemically machining a workpiece.

### Summary of the Invention

Of particular interest are device and methods for machining internal surfaces of a workpiece for example an internal surface within a bore or cavity within a workpiece. The cavity may be in any form for example a channel. The present invention relates to all workpieces that can be electrochemically machined. Typical workpieces will be those that are based on metals including alloys.

The present invention provides a device for electrochemically machining a workpiece, the device comprising:
(i) an elongate device body having a first end and a second end and an electrically insulating sidewall with one or more electrolyte delivery apertures defined in the elongate device body;
(ii) an electrode within the device body;
(iii) an electrolyte supply arrangement that confines electrolyte within the device body so that the electrolyte can only be delivered through the aperture(s) for electrochemically machining the workpiece.

This provides a very simple arrangement which is very flexible in end-use applications. As the exterior of the device is electrically insulating the device can be inserted into a workpiece without fear of shorting against the workpiece even when the workpiece is oppositely charged to the electrode. A device of the invention forms an electrolytic cell with the workpiece. The electrode and the workpiece are oppositely charged and the electrolyte acts between the electrode and the workpiece. Typically the electrode is a cathode and the workpiece is an anode. It will be appreciated that even though a workpiece is referred to as a workpiece it forms an electrode, typically the anode, within the electrolytic cell.

For example a device of the invention is steerable. For example, unlike rigid devices, it may be sufficiently flexible to bend and follow bends in a workpiece, for example bends in a conduit defined in the workpiece. In this arrangement a steering system may be provided, for example one based on a cable anchored to a steerable end of the device. Movement of, for example pulling on, the cable allows for steerable movement of the steerable end. For example one end of the device of the invention may be deflected by the cable. For example steering and/or deflection arrangements used for catheters may be employed. Desirably the steering is omnidirectional.

Furthermore as the electrolyte is confined within and ejected through the device body the workpiece does not need to be flooded. This allows greater control on the electrochemical machining as the workpiece will only be machined where the delivered, for example jet delivered, electrolyte impinges on the workpiece. For example the electrolyte may be ejected from the device of the invention in the form of a straight or an expanding jet.

It will be appreciated that the electrode will be proximate the aperture(s). Suitably this means that the delivered electrolyte is exposed to sufficient voltage between the electrode and the workpiece to allow machining for example by anodic dissolution of the workpiece.

For example the electrode may be exposed, at, or proximate to, an edge of an, or each, aperture.

Desirably the device of the invention is resiliently deformable, so that in use, it can flex without permanently deforming/kinking. This means it can follow the path of a bore or cavity, (within a workpiece) even if that path is tortuous. Furthermore as it does not kink this means that the electrolyte delivery is not interrupted by pinching/bending of the device.

In one convenient arrangement at least one electrolyte delivery aperture is defined in the sidewall so that electrolyte exits to the side of the elongate device body at a position intermediate the first end and the second end. This is a convenient arrangement which allows ease of machining of an internal surface of the workpiece. For example the surface being machined may be machined to the side of the device of the invention.

It will be appreciated that a device of the invention can be placed against or close to a surface of a workpiece to allow machining. Ejection of the fluid may be through an aperture where an axis though the centre of the aperture is at 60 to 120, for example 70 to 110, such as 80 to 100 for example about 90 degrees to an elongate axis of the device. So the axis of the aperture may be perpendicular to an elongate axis of the device or may be offset from such a perpendicular position.

In one simple construction the electrically insulating sidewall of the device body is formed by an electrically insulating outer tubular sheath. This allows for a simple robust construction that is easy to use.

It will be appreciated that in a device according to the invention the elongate body may be configured for machining the internal surface of a bore defined in a tubular workpiece. For example the device may have a cross sectional area less than that of a bore of a workpiece into which it is to be inserted.

The electrode in any form may be embedded within the sidewall or the sidewall may be located over it.

Desirably the electrode within the device body is a tubular electrode defined by an annular sidewall. This allows for ease of construction as the tubular electrode is present around the circumference of the device meaning that the position of an aperture can be chosen about the circumference. Furthermore the tubular nature of the electrode can reinforce the device body against kinking/deforming. The tubular electrode may be located within and electrically insulated by a tubular electrically insulating sidewall.

Desirably the electrode is resiliently deformable. This means it can reinforce the device body. Where it extends along substantially all of the length of the device body it will reinforce the device body. It will be appreciated that where the electrode is a tubular electrode and resiliently deformable this allows the device body to be resiliently deformable yet the electrode can reinforce the device body against kinking/deforming.

In any embodiment of the invention the electrode may be reticulated, optionally in a mesh form for example in a reticulated tubular form. Furthermore it is desirable that the electrode is resiliently deformable in this form. This provides one simple but very useful form of the electrode. In such a configuration the electrode extends about the elongate body so the positioning of an aperture to allow delivery of electrolyte can be selected. Furthermore the electrode will allow electrolyte to pass through it. Additionally it will allow for resilient deformation of the device.

Typically a device of the invention will be supplied in a pressurised manner with electrolyte delivered to the aperture(s) under pressure. Accordingly it is desirable to provide an electrolyte outlet for allowing electrolyte, for example electrolyte within the workpiece to be drawn out, for example drawn through the device.

The electrode supply arrangement may supply positive or negative pressure to the electrolyte to allow the electrolyte to be supplied to and then taken out, for example drawn out, of the device so as to provide a continuous supply of electrolyte to the aperture(s). It will be appreciated that to supply pressurised electrolyte to the apertures it is necessary to supply more electrolyte than is required for machining to maintain pressure. Furthermore to prevent over-pressurisation an outlet for electrolyte (not used for machining) will be required also.

A device of the invention may comprise an electrically insulating inner sidewall, distinct from the outer sidewall wherein the electrode is located between the inner sidewall and the outer sidewall. Again a very simple construction. It will be appreciated that neither the inner sidewall nor the electrode should prevent electrolyte from exiting the device body through a delivery aperture. To the extent necessary, one or more apertures can be provided in the electrode and/or inner sidewall to allow electrolyte exit the device body through a delivery aperture.

Desirably the electrode is a negative electrode. Desirably the workpiece acts as a positive electrode. For example an applied potential between the electrode and the workpiece can cause both to act as respective electrodes, and together with the electrolyte this forms an electrochemical cell. Such a cell can be configured for machining of the workpiece by dissolution. Selective dissolution of the workpiece is controlled.

A sufficiently high current is passed between the electrode and the workpiece to cause dissolution of the workpiece to effect machining. The dissolution is controlled so as to control machining of the workpiece.

The electrolyte may be acidic and/or saline.

Desirably a device of the invention comprises a control system for controlling the rate of delivery of the electrolyte. The control system may control multiple parameters such as the movement of the electrode, the voltage and/or current, the distance from the workpiece. For example a device of the invention may comprise a control system for controlling the rate of movement of the device within a workpiece.

One or more of the following parameters may be controlled: pH of electrolyte, temperature of electrolyte, flow rate of electrolyte, pressure of electrolyte. One or more of the following may alternatively or additionally be controlled, for example movement of the device, voltage and current.

One or more sensors may be provided to allow one or more of pH of electrolyte, temperature of electrolyte, flow rate of electrolyte, pressure of electrolyte to be sensed.

Desirably the pH of the electrolyte is 2 to 11.

Desirably the temperature of the electrolyte is 18 to 50 °C.

Desirably the flow rate of the electrolyte is 0.01 to 1 litre/minute.

Desirably the pressure experienced by the electrolyte is 0.1 to 7 MPa. This may be the pressure experienced to cause a jet of electrolyte through the aperture(s).

The present invention provides a device for electrochemically machining the internal surface of a bore defined in a tubular workpiece, the device comprising:
(i) an electrically conductive tubular electrode having an annular sidewall defining a hollow conduit;
(ii) an electrically insulating outer tubular sheath having an annular sidewall defining a hollow conduit, the sidewall of the outer tubular sheath annular overfitted to the annular sidewall of the electrically conductive tubular electrode so that the tubular electrode is within the hollow conduit of the outer tubular sheath;
(iii) an electrolyte intake for supplying electrolyte to the hollow conduit of the tubular electrode; and
(iv) one or more apertures defined in the annular sidewall of the outer tubular sheath to allow passage of electrolyte from within the hollow conduit of the tubular electrode through the annular sidewall of the outer tubular sheath, so that the electrolyte is available for electrochemically machining the internal surface of the bore defined in the tubular workpiece.

The present invention also relates to a method of electrochemically machining an internal surface of a workpiece, the method comprising the steps of:
(i) providing a device according to the present invention;
(ii) inserting the device into the workpiece;
(iii) delivering electrolyte only through the aperture(s) for electrochemically machining the workpiece; and
(iv) electrochemically machining the workpiece.

A method of the invention may further comprise the step of moving the device within the workpiece to electrochemically machine the internal surface at different positions.

In a method of the invention the electrochemical machining may be continuous while moving. The electrochemical machining may be intermittent so that only discrete distinct areas are machined. Spaced apart areas of the workpiece may be machined.

As mentioned above it is desirable that in a method of the invention the workpiece is negatively charged.

The present invention is suitable for use where the workpiece is made by additive manufacturing, such as laser sintering/melting or 3D printing.

Additive manufacturing (AM) is a technology that is constantly developing at a rapid pace, especially in the manufacturing of metal components. The freedom of design associated with has led to the widely accepted use of AM in aerospace, defence, biomedical, energy and automotive sectors. Producing parts layer by layer has led to the ability to produce complex parts that are otherwise difficult to make with traditional machining methods and without the need to assemble separately produced parts.

While additive manufacturing has the ability to produce intricate and complex geometries, workpieces produced can be of relatively poor quality. For example surface finish and mechanical properties may not be of the same quality as workpieces made by other methods.

In relation to the present invention one additive manufacturing process that is known to have such issues is selective laser melting (SLM). SLM is an additive manufacturing process which uses a high power laser to locally melt layers of metal powder together to form a finished workpiece. These workpieces can contain internal surfaces with differing geometries such as grooves, straight holes and spiral channels. However, due to the nature of the process, the surface finish on these components typically requires additional manual finishing or post-processing to reduce surface irregularities and/or roughness.

The dominant parameters that influence the SLM process are scanning speed, hatch spacing, laser power and layer thickness. Some irregularities may be formed by a "balling effect", where small droplets of molten metal remain on the workpiece surface, causing surface unevenness. This effect can be caused by increased scanning speed, beam tripping during scanning or through varying condition of the melt pool.

It has also been proposed that uneven solidification of the melt pool can lead to higher surface roughness and waviness. Although increased peak laser power has a positive impact on SLM certain surface finishes and reducing the balling effect, other parameters such as reduced scan speed could improve individual surfaces while having the opposite effect on perpendicular surfaces. In a study by Kruth et al, it was shown that these surface roughness values ranged between 5.39 µm Ra and 16.71 µm Ra for three separate SLM processes, although these values could be reduced with various post processing techniques.

Mechanical properties and surface roughness can be key parameters in certain industries and situations. For instance, minor scratches on internal bores can cause energy loss or failures in engines and aerospace components, while roughness in internal channels can heavily influence flow behaviour in those channels. Due to these requirements, the issues in surface finishes in SLM produced workpieces, and the growing use of AM in manufacturing require post-processing techniques on some AM produced workpieces.

Traditional machining techniques can be called upon to modify the workpiece geometry and properties, e.g. milling. However, in cases where precise surface properties are required in the AM process, contact machining techniques will ultimately alter these properties, changing surface stresses and producing heat affected layers. Traditional manufacturing methods are also unsuitable to machine thin walled components, or those with micro-geometries, especially of modern super-hard alloys, as well as holes with large aspect ratios and internal channels of a non-straight nature.

Common surface improvement methods such as sand-blasting, chemical etching, plasma spraying, shot peening are labour intensive and are extremely difficult to apply to SLM produced workpieces which have complex geometries.

For surface modification of AM parts, laser re-melting has been used.

The invention relates to device and methods where electrolyte for electrochemically machining a workpiece is ejected in the form of a jet. For example the present invention performs Jet ECM as described above. Unlike conventional ECM, Jet-ECM does not use a tool to impart the desired shape to the workpiece, but instead uses a pressurised jet of charged electrolyte which is expelled to locally dissolve material.

In the present invention the electrolyte is expelled through the aperture(s). Optionally one or more nozzles are provided on the device to form the aperture(s).

The devices and methods of the invention can be used for post-processing workpieces. In this respect post-processing refers to processing after formation of the workpiece for example after formation by AM.

The devices and methods of the invention are capable of selectively improving the surface roughness properties of workpieces such as (electrically) conductive workpieces in particular metallic workpieces. In particular the present invention can be used to electrochemically machine workpieces produced by additive manufacturing (AM).

Furthermore with the present invention surface features such as channels, cavities such as pitting, and surface textures can be machined into the workpiece and do not need to be formed as the workpiece itself is being made.

The device of the invention can be operated with a small working gap for example about 1.5 mm or less, for example about 1 mm or less between the device and the workpiece surface being machined. For example there may be a distance of about 1.5 mm or less, such as about 1 mm or less between the electrode and the workpiece at the aperture(s). This will typically be a measurement taken at right angles to the elongate axis of the device of the invention.

It will be appreciated that in order to allow close proximity of the electrode (which is within the device) to the workpiece, the cross-sectional dimensions of the device itself, must allow this. Typically this means the elongate device body itself has a relative small cross-sectional dimension. For example the device may have a total cross-sectional dimension e.g. a diameter of about 4 mm or less.

Typically the device of the invention is arranged (in cross-sectional view) with the electrode within the device body positioned to the inside of the electrically insulating sidewall. In use, the workpiece will be positioned outside of the electrically insulating sidewall.

It is desirable that the electrically insulating sidewall itself has a relatively small (cross-sectional) side wall thickness/width. For example this may be approx. 1 mm or less. This will allow the distance through the aperture(s) from the electrode to the workpiece to be about 1 mm or less in particular in a configuration where the aperture(s) are in the sidewall. This allows the electrode within the device body, to be positioned sufficiently close to the workpiece surface to be machined, so that the electrolyte being delivered through the aperture(s) is active for machining.

Indeed as the electrically insulating sidewall is electrically insulating it can be placed against a surface of the workpiece. This means the thickness of the sidewall may be equal to the distance between the electrode and the workpiece.

The aperture(s) may be formed in the sidewall. Alternatively or additionally one or more of the aperture(s) may be provided by a nozzle and/or port on the sidewall. It will be appreciated that if any nozzle or port employed is exposed to the exterior of a device of the invention it is desirably non-conductive or is insulated to avoid conducting current from the workpiece to the device of the invention. Furthermore it is desirable that any nozzle or port employed is desirably non-conductive or is insulated to avoid current from the electrode being conducted to the workpiece.

Furthermore being insulative the device and methods of the present invention allow the device to be inserted into a workpiece, for example into a cavity or bore, without shorting against the workpiece being an issue.

The present invention in particular may be utilised to reduce surface roughness on a workpiece such as a medical device, such as a medical device being inserted or implanted within the human body. Such devices include catheters, stents, etc.

The present invention achieve allows the electrically conductive workpiece to be the positively charged electrode (anode), the metallic electrode (within the device) is the negative electrode (cathode) and the electrolyte allows the transmission of electrons from the workpiece.

Advantages of the present invention include that only material exposed to the jet is removed therefore highly specific material removal can be achieved through varying one or more of the feed rate of electrolyte, current, working gap, electrolyte concentration, temperature and flow rate.

The present invention can be used to provide Jet-ECM which has been shown to produce excellent surface finishes of up to 0.1 µm Ra and the ability to accurately alter surface geometries.

Furthermore the Jet-ECM of the invention has the capability to machine thin walled components, with complex geometries without altering the surface properties of the part or producing heat affected zones. All these characteristics lend the process to the post-processing of metallic SLM produced workpieces.

Furthermore the present invention allows Jet-ECM to be applied to internal surfaces of workpieces. In the past Jet-ECM has only been applied to the external surfaces of components.

The device of the invention can be provided in a multilayer arrangement with an electrode as one layer and the electrically insulating sidewall as another. When an electrically insulating inner sidewall is provided, it too may be in a layer. Accordingly there can be an at least three layer construction with the electrode located between the inner sidewall and the outer sidewall.

The electrically insulating sidewall may be formed of any suitable material such as a polymer material.

The invention can use an electrically insulating sidewall for example one formed of an extruded outer polymer to prevent the conductive electrode, for example in the form of a braid or mesh touching the workpiece. This outer layer can be tightly controlled, allowing fine control of the distance between the electrode and the workpiece.

A multilayer approach can be used with an internal polymer layer.

A portion or portions of the outer layer can be removed in a controlled way to designing a device for machining in a specific way. The electrode can be left intact for example as an internal layer. This allows the electrode to be exposed to make an electrical connection without electrolyte escaping at that point.

By removing the outer layer, electrode/braid and inner layer, the device controls where the electrolyte exits and delivers the electrolyte only to the area that requires machining.

By only having small areas of the electrode exposed, the current, and hence power, required in the device is reduced.

Usage of a reticulated electrode for example in the form of a braid, prevents the device from kinking allowing it to be moved around tight bends.

The device could be combined with a catheter type steerage system, allowing the steering of the device to be controlled.

The present invention is set out in more detail below.

### Brief Description of the Drawings

Embodiments of the invention will be described, by way of example only, with reference to the accompanying drawings in which:
**Figure 1(a)** is a schematic representation of a device of the invention in use within a bore formed within the workpiece;
**Figure 1(b)** is an image of the device of the invention in use ejecting electrolyte onto a workpiece;
**Figure 2** is an image of a workpiece that is machined according to the schematic representation of **Figure 1****;**
**Figure 3** is a schematic representation of a layer structure within a device of the invention;
**Figure 4** is a schematic representation of a device of the invention with the same layer structure as **Figure 3** but with apertures in the externally insulating sidewall;
**Figure 5** is a schematic representation of a device **Figure 4** with arrows indicating electrolyte flow;
**Figure 6** is a schematic representation of a device **Figure 4** inserted within a workpiece and with arrows indicating electrolyte flow;
**Figure 7** is a schematic representation of a device **Figure 4** inserted within a workpiece and with arrows indicating electrolyte flow and the workpiece having being machined by Jet ECM;
**Figure 8** shows a pre-machined channel surface viewed on Keyence VHX-5000, (a) 100x magnification, (b) 500x magnification as described in more detail below;
**Figure 9** shows a tilted SEM micrograph of pre-machined channel surface, x55 magnification as described in more detail below;
**Figure 10** is an image of a device of the invention in use to machine the internal surface of bores of a stainless steel substrate as described in more detail below;
**Figures 11(a)** to **(f)** shows Keyence VHX-5000 images of machined sections from trials as described in more detail below: (a) Trial 1 x500 magnification, (b) Trial 2 x500 magnification, (c) Trial 2 x100 magnification, (d) Trial 3 x100 magnification, (e) Trial 4 x100 magnification, (f) Trial 4 x 500 magnification;
**Figure 12** is a device of the invention similar to that shown in Figures 4 to 7 but with a closed end and with electrolyte removal through an aperture in the closed end;
**Figure 13** is a device of the invention similar to that shown in Figures 12 but with electrolyte removal through an aperture in the side wall; and
**Figure 14** is an image of a tubular material suitable for use in forming a device of the invention. **Figure 14(a)** shows the tubular material while **Figures 14(b) and (c)** show enlarged views of part thereof.

### Detailed Description of the Drawings

The present invention proposes a novel device and technique for using Jet-ECM to post-process an internal channel within a workpiece. This is demonstrated using a workpiece formed from Inconel 625 (Inconel 625 is a nickel based superalloy) and that was produced by SLM.

The process used a device of the invention which is a newly designed jet nozzle system to alter the surface roughness of a 2mm diameter through hole in the workpiece while analysing the effects of current and translational speed on the surface properties. The results show the suitability of the device and method of the invention in a Jet-ECM process to post-process AM parts with internal features.

### Experimental equipment

This investigation is performed using a Jet-ECM system called R500 developed by Blueacre technology.

The system comprises of a 3-axis gantry system with a device of the invention mounted on the z-axis. The working envelope of the system is 400mm x 400 mm x 150 mm (X x Y x Z). The electrolyte is circulated from a reservoir to the device of the invention via a near pulseless, variable flow Micropump capable of providing flows up to 1180 ml/minute and 10 bar (1 MPa of pressure. An electric current is provided to the device and the workpiece, via an aluminium workbed, using a 1.5kW programmable power supply. A sensor array monitors pH, electrolyte temperature in the reservoir, flow rate and pressure. The axis movement, voltage and current output are also controlled in this case by being programmed and controlled via a local PC.

The device of the invention can be utilised within small spaces, As Jet-ECM relies on a small working gap (for example <1mm) between the negatively charged electrode (cathode) and the workpiece (anode) conventional Jet ECM devices used for machining external surfaces would be unable to fit into and machine holes in the workpiece.

With the present invention the device provides an entirely new nozzle arrangement that was designed and developed to allow machining on the internal features of parts.

The device 1 of the invention, as made in one configuration for the purposes of demonstrating the invention, has an elongate device body 2 having a first end 3 and a second end 4 and an electrically insulating sidewall 8 with one or more electrolyte delivery apertures 6 defined in the elongate device body 2. In the embodiment an electrode 7 is positioned within the device body 2. The electrically insulating sidewall 8 has an external surface 8a and an internal surface 8b. In this case the outer perimeter of the device body 2 is defined by the electrically insulating sidewall 8 or more particularly external surface 8a thereof.

The electrode 7 is elongate also and has an outside cross-sectional area c₁ that is a little smaller than the inside cross-sectional area c₂ of the electrically insulating sidewall 8. The electrically insulating sidewall 8 has an outside cross-sectional area c₃.

This provides an electrolyte delivery conduit 9 which is defined between the electrode 7 and the internal surface 8b of the electrically insulating sidewall 8. In particular the conduit has a cross-sectional area defined by c₂ - c₁.

The device 1 is resiliently deformable, so that in use, it can flex without permanently deforming/kinking. For example the electrically insulating sidewall may be made of a material which can flex such as silicone. And also the electrode 7 can flex also.

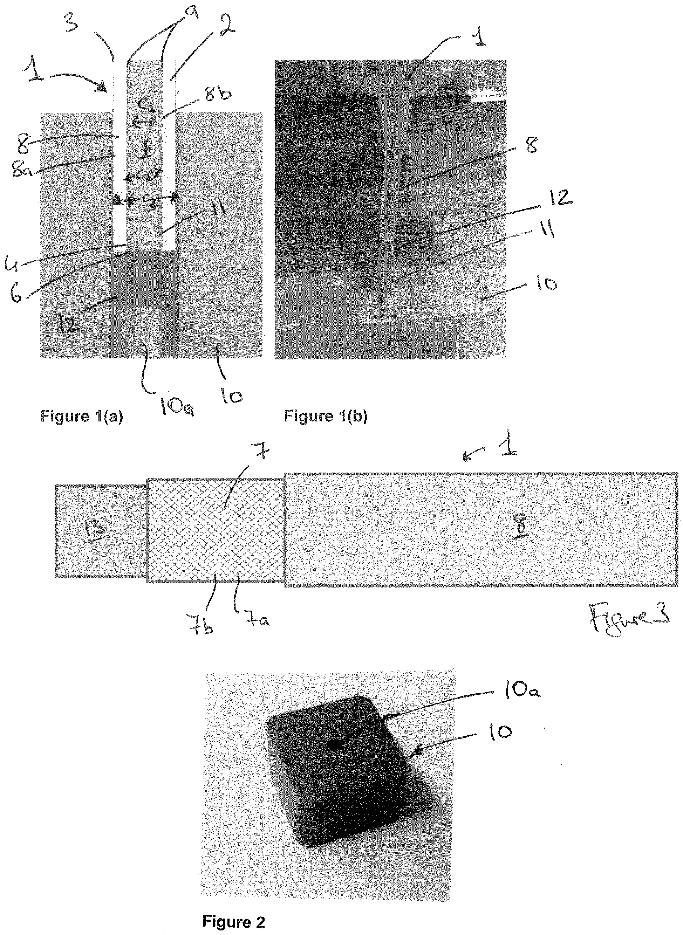

In **Figure 1(a)** the device 1 is shown inserted within a conduit in the form of a bore 10a in a workpiece 10. The electrode supply arrangement is for supplying positive pressure to the electrolyte 11 to allow the electrolyte to be supplied to the device so as to provide a continuous supply of electrolyte 11 through aperture 6. An electrolyte supply arrangement delivers electrolyte 11 to, and confines electrolyte 11, within the device body 2 so that the electrolyte 11 can only be delivered through the aperture 6 for electrochemically machining the workpiece 10 in particular for electrochemically machining the internal surface of the bore 10a. Because of the pressure imparted to the electrolyte 11, and the confinement of the electrolyte 11 to the space (represented by c₂ - c₁) between the electrode 7 and the internal surface 8b of the electrically insulating sidewall 8, the electrolyte 11 is ejected/delivered from the aperture 6 of the device 1 in the form of an expanding jet 12. The expanding jet 12 may be considered to be frustoconical in shape. The ejected electrolyte 11 impinges on the internal surface of the bore 10a. As the workpiece 10 is oppositely charged to the electrode 7 the arrangement forms an electrochemical cell where the internal surface of the bore 10a can be electrochemically machined.

It will be appreciated that the device 1 is a close fit within the bore 10a. Should the bore 10a be provided with one or more bends, the device 1 of the invention will be able to follow those bends as it can flex. Also as the external surface of the device of the invention is electrically insulating, there is no risk of shorting between the electrode 7 and the workpiece 10.

**Figure 1(b)** is a photograph of an actual device 1 of the invention with an electrically insulating sidewall 8 in use to machine a workpiece 10 by ejecting electrolyte 11 in the form of an expanding, for example frustoconically shaped, jet 12. This will be described in more detail below.

In **Figure 1(b)** the outer insulating sidewall 8 is provided in the form of an outer insulating silicon tube of length 20 mm which has an internal and external diameter of 1mm and 1.8mm respectively. The side wall thickness/width is approximately 0.4 mm.

An electrode 7 within the device body is provided in the form of a 0.8 mm diameter copper coated wire. The electrode 7 runs through the middle of the tube, with the bottom end located in line with the end of the tube (as shown in the schematic representation of **Figure 1a****)**. The distance between the outer diameter of the wire and the internal wall of the tube allows sufficient electrolyte to flow to the workpiece. The tube is connected to a nozzle holder via a 1/16" (1.5875 mm) ID hose barb adaptor. The electrode (wire) is connected to the nozzle holder which is in turn connected to a power supply to provide a negative current to the electrode 7 so it acts as a cathode.

The flow out of the nozzle system is pressure dependent, with increasing pressure increasing the diameter of the jet shape.

Desirably the electrode/wire is held against movement within the tube and thus the flow characteristics and in turn the jet shape is kept constant and is not affected by any such movement.

A balance between pressure and flow shape should be selected. High pressure can cause an ejection velocity of the electrolyte that is too high to transmit current effectively. On the other hand if the pressure was too low the jet would not expand enough to make contact with the workpiece near to the cathode. A desirable representative flow shape can be seen in **Figures 1(a)** and **1(b)**.

**Figure 2** is a photograph of a workpiece 10 with a bore 10a defined therein. This is a real workpiece used in the examples below and it can be considered to be the workpiece 10 represented schematically in **Figure 1(a)**.

**Figure 3** is a schematic representation of a layer structure within a device 1 of the invention. In this configuration the device comprises an outer electrically insulating sidewall 8. The electrode 7 is in a reticulated form being a metal braid/mesh comprising a series of interconnected strands 7a of wire defining an array of apertures 7b. An electrically insulting inner sidewall 13 is also provided. This is a multilayer structure with the electrode 7 in a layer between the outer electrically insulating sidewall 8 and the electrically insulating inner sidewall 13. In this arrangement each of the electrode 7 the outer electrically insulating sidewall 8 and the electrically insulating inner sidewall 13 are circular in cross-section. The schematic representation has been shown in a cut-away view to show each of the electrode 7 the outer electrically insulating sidewall 8 and the electrically insulating inner sidewall 13. It will be appreciated that in a device of the invention the electrode 7 will not be exposed as in **Figure 3** but instead covered by the outer electrically insulating sidewall 8. Exposure of the electrode 7 through the outer electrically insulating sidewall 8 will only be through apertures where electrolyte 11 is to be delivered.

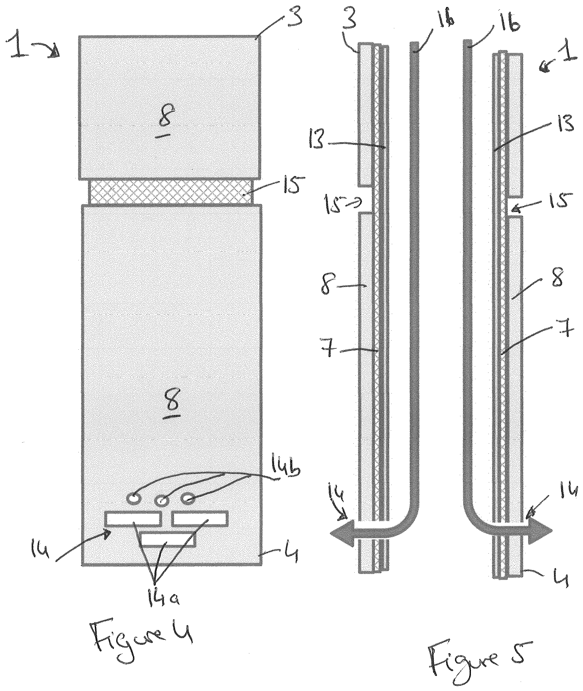

**Figure 4** is a schematic representation of a device of the invention with the same layer structure as **Figure 3** but with apertures 14 in the outer externally insulating sidewall 8. The apertures are in the form of rectangular slots 14a and circular holes 14b. Matching apertures 14 are provided on the opposite side of device 1 as best seen in **Figures 5 to 7** below.

Also an exposed area 15 is provided. The exposed area 15 is to allow connection to one or more wires to the electrode 7 for providing a charge/voltage to the electrode. Alternatively an area 15 may also be provided to allow machining through 360 degrees.

**Figure 5** is a schematic representation of a device 1 of **Figure 4** with arrows 16 indicating electrolyte 11 flow. It will be appreciated that the end 4 of the device 1 is closed and that exit of electrolyte occurs only through apertures 14. The electrolyte 11 will exit as a jet. The shape of the jet is determined by the shape of apertures 14. The electrode 7 is exposed through the apertures 14 and Jet ECM can thus take place. As in this case the electrode 7 is reticulated with apertures 7a it will not interfere with delivery of electrolyte 11 through the outer electrically insulating sidewall 8. However the electrically insulating side wall 8 may have corresponding apertures defined therein to match the apertures in the outer electrically insulating sidewall 8.

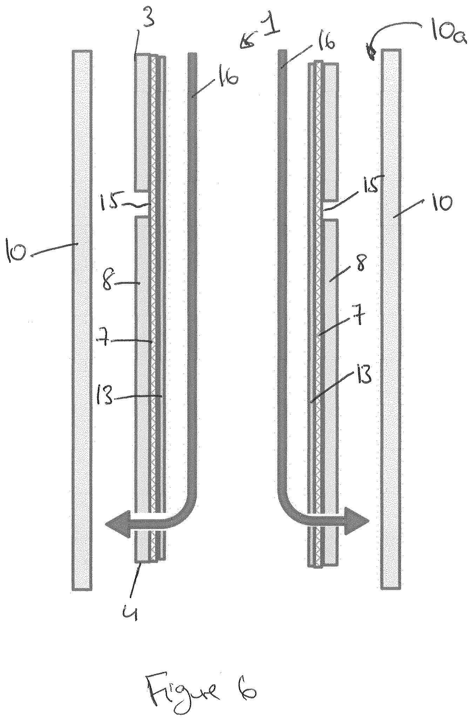

**Figure 6** is the same schematic representation of a device 1 as in Figure **5** but inserted within a bore 10a of a workpiece 10. The ejected electrolyte impinges on the internal surface at the bore 10 of the workpiece only through apertures 14. In this way machining can be controlled. As described above the workpiece 10 is connected to a positive potential so that the device 1 and the workpiece 10 form a JET-ECM arrangement.

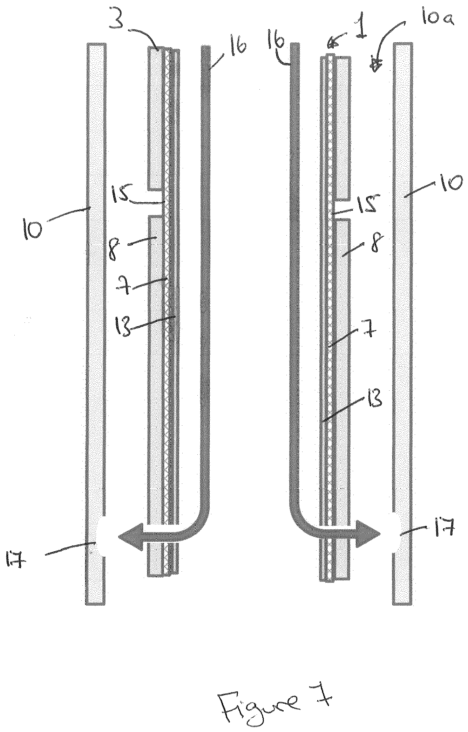

**Figure** 7 shows a similar arrangement to **Figure 6** but with the internal bore 10a of the workpiece 10 having being machined by Jet ECM from the device 1. Anodic dissolution of the workpiece has taken place at the areas 17 of the workpiece.

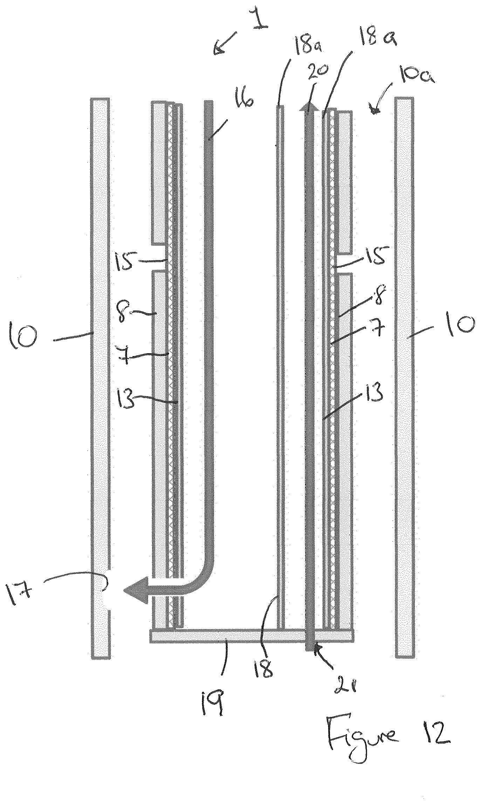

**Figure 12** shows an alternative arrangement where the device 1 has a closed end 19. So the device body 2 has a closed end. The main difference is in the recirculation/drawing off of electrolyte. In the device 1 in **Figure 12** electrolyte 11 for machining exits the device 1 as indicated by arrow 16. The workpiece 10 is anodically dissolved at area 17. This is similar to earlier embodiments. However, as mentioned herein it is desirable to provide an electrolyte outlet for allowing electrolyte to be drawn out of the workpiece so that a continuous pressurised supply of electrolyte can be provided. In order to remove electrolyte as indicated by arrow 20 an aperture 21 is provided in the closed end 19. A lumen 18 having a tubular sidewall 18a is provided surrounding the aperture 21 and mating with the closed end 19. This means that a pump or other suitable means can be used to draw electrolyte back though aperture 21 into lumen 18 and through the device body 1 to a suitable discharge or reservoir as indicated by arrow 20.

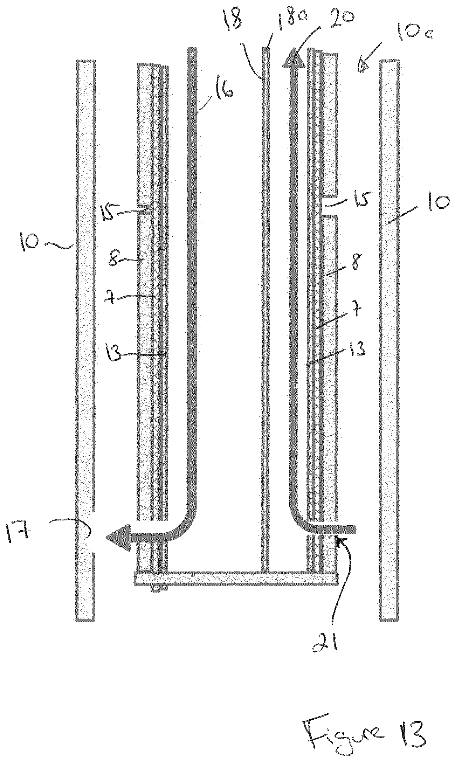

**Figure 13** shows an alternative arrangement where the device 1 also has a closed end 19. So again the device body 2 has a closed end. Again there is recirculation/drawing off of electrolyte 11. In the device 1 in **Figure 13** electrolyte 11 for machining exits the device 1 as indicated by arrow 16. The workpiece 10 is anodically dissolved at area 17. However, as discussed herein it is desirable to provide an electrolyte outlet for allowing electrolyte within the workpiece to exit, for example be drawn out through the outlet. In order to remove electrolyte from a workpiece as indicated by arrow 20 an aperture 21 is provided in the externally insulating sidewall 8. A lumen 18 having a tubular sidewall 18a is provided surrounding the aperture 21 and mating with the side wall 8 (and closed end 19). This means that a pump or other suitable means can be used to draw electrolyte back though aperture 21 into lumen 18 and through the device body 1 to a suitable discharge or reservoir as indicated by arrow 20.

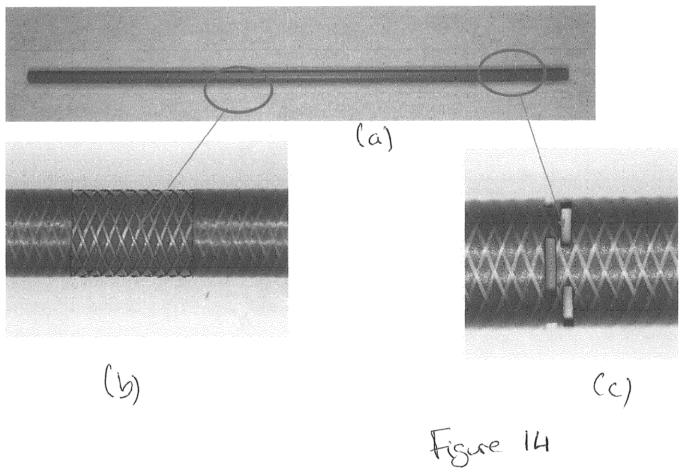

**Figure 14** is an image of a tubular material in the form of a braided or reticulated metal tube within a plastics, in particular polyimide plastic tube. It is suitable for use in forming a device of the invention for example for forming device body 2. For example it shows the desired flexibility. **Figure 14(a)** shows the tubular material while **Figure 14(b)** shows an enlarged view thereof in which the exposed braided metal which forms the electrode is exposed such as in area 15 above. This may be done by cutting away the plastics (polyimide) material. Also as shown in **Figure 14(c)** the plastics tube has been cut away to form slots similar to slots 14a of **Figure 4****.** These slots 14a will determine the machining pattern on the workpiece 10. It will be appreciated that the nature of the tubular material in **Figure 14** allows the plastics material to be cut away so that desired discrete areas of the electrode formed by the metal braid may be exposed.

A study was performed where series of tests were carried out using a device as shown in **Figure 2**. Each workpiece 10 **(****Figure 2**) used for this study is an Inconel 625 part that is produced using AM in particular a machine called an EOS M290 which uses direct laser sintering. A series of such workpieces were made.

A bore 10a of 2mm nominal diameter runs through the centre of the cross section in each workpiece.

One sample workpiece 10 was taken and machined into two sections along the length of the bore using wire EDM (electrode discharge machining). The chemical compositions of the workpieces were studied along the length of the bore using SEM imaging in particular an SEM device known as an EDX EVO-50. A total of 13 SEM spectrums were analysed, with a uniform chemical composition found across the samples taken. The SEM scans are labelled "Series A". The results are seen in **Table 1.**

**Table 1: Inconel 625 Sample material composition across internal surface of bore (%)**

| | **Spectrum** | **Al** | **Ti** | **Cr** | **Fe** | **Co** | **Ni** | **Mo** |
|---|---|---|---|---|---|---|---|---|
| **Series A** | Mean | 3.85 | 0.91 | 24.42 | 1.19 | 0.2 | 59.25 | 10.2 |
| | Std. Deviation | 0.28 | 0.17 | 0.28 | 0.28 | 0.23 | 0.73 | 0.69 |
| | Max. | 4.14 | 1.17 | 24.73 | 1.51 | 0.50 | 60.51 | 11.16 |
| | Min. | 3.46 | 0.62 | 23.92 | 0.67 | 0 | 58.13 | 8.91 |

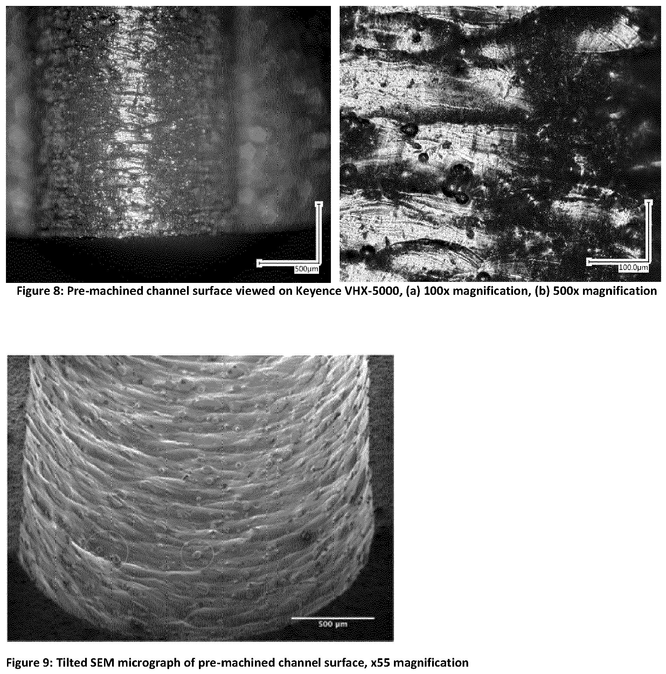

When viewed on an optical microscope (model Keyence VHX-5000) and an SEM (model Hitachi S5000-N), the surface showed an uneven profile. Firstly, there were visible ridges present thought to have been at the interface between two layers during the AM manufacturing process. The images taken with the Keyence machine at 100 times and 500 times magnification are shown respectively in **Figure 8(a)** and **Figure 8(b)****.**

Balling can also be easily seen on the material surface, and one example of balling is highlighted by being circled in **Figure 8(b)****.**

The surface roughness value of the pre-machined sample was calculated using a NanoFocus µscan non-contact optical profilometer with a sampling rate of 5 µm along the channel (y-direction) and 25 µm across the channel (x-direction). A roughness value of 4.986 µm Ra was found by averaging the values calculated along three separate lengths across the area using a cut-off length of 0.8mm over a minimum of 5 cut-off lengths. **Figure 9** shows an SEM of the pre-machined channel surface (it is a tilted SEM at 55 times magnification).

Once stabilised, the set current was supplied to the electrodes, and instantaneously the nozzle began travelling at a set velocity in an upward direction, away from the direction of flow for 4 mm. After this point the power supply stopped providing a current to the electrodes and the nozzle was allowed to travel a further 3mm to exit the workpiece. At this point the flow of electrolyte was turned off, and the sample removed from the workbed for analysis.

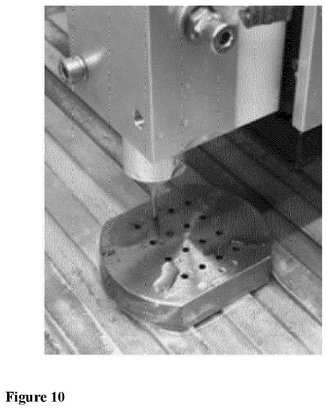

Prior to the main trials, a series of preliminary trials were performed to test the system (**Figure 10**). These trials were performed on a stainless steel plate with a 4 x 4 matrix of 2mm diameter holes. Trials were run at 4 different translational velocities, 0.05, 0.1, 0.15 and 0.2 mm/s. At each velocity, currents of 0.2, 0.4, 0.6 and 0.8 A were attempted.

From these preliminary trials, and the pre-experimental jet shape analysis, the parameters for the main trials were selected and can be seen in **Table 2.**

**Table 2 Parameters for machining trials**

| **Parameter** | **Trial 1** | **Trial 2** | **Trial 3** | **Trial 4** |
|---|---|---|---|---|
| **Current (A)** | 0.2 | 0.4 | 0.2 | 0.4 |
| **Translational Velocity (mm/s)** | 0.05 | 0.05 | 0.15 | 0.15 |
| | | | | |
| **Pressure (bar)** | 1.4 (+-0.1) | 1.4 (+-0.1) | 1.4 (+-0.1) | 1.4 (+-0.1) |
| **Flow Rate (l/min)** | 0.145 (+-0.1) | 0.145 (+-0.1) | 0.145 (+-0.1) | 0.145 (+-0.1) |

It can be seen that in all the machined workpieces, the surface roughness value was improved over the original sample, with Trial 1 producing the best surface roughness value. It was expected that as the current increases, increasing the amount of material removed, the surface roughness would improve. Alongside this, as the speed decreases, the jet remains over a specific section for a longer period of time after initially breaking down the oxide layer, thus increasing the material removal over a specific section. It is expected that increased material removal will produce the best surface roughness values as the ridges and balling effect found on the workpiece would be most likely removed.

These characteristics would suggest that Trial 2, with the highest current (0.4 A) and lowest translational speed (0.05 mm/s) would produce the most material removal, and therefore the best surface finish. Although Trial 2 did produce the best surface finish, it was almost identical to the finish produced in trial 1, with trial 1 producing the lowest individual roughness value (2.466µm Ra). This suggests that at this translational speed, an increase in current provides little benefit above 0.2 A, a suggestion that is repeated at in trials 3 and 4. In trial 3 and 4 an increase in current of 0.2 A provided an improvement of 0.2 µm Ra, a difference of 4% in comparison to the original value.

These results suggest that the translational velocity has a more significant impact on the surface roughness achieved during the Jet-ECM trials. At an applied current of 0.2 A, the average roughness value produced at 0.05 mm/s translational velocity is 1.19 µm Ra, and at 0.4 A is 0.975 µm Ra. This could be due to the increased time in which machining occurs, with more time to remove the ridges and 'balling' after breaking down the oxide layer. However, this improvement comes at a cost of increasing the machining time by three.

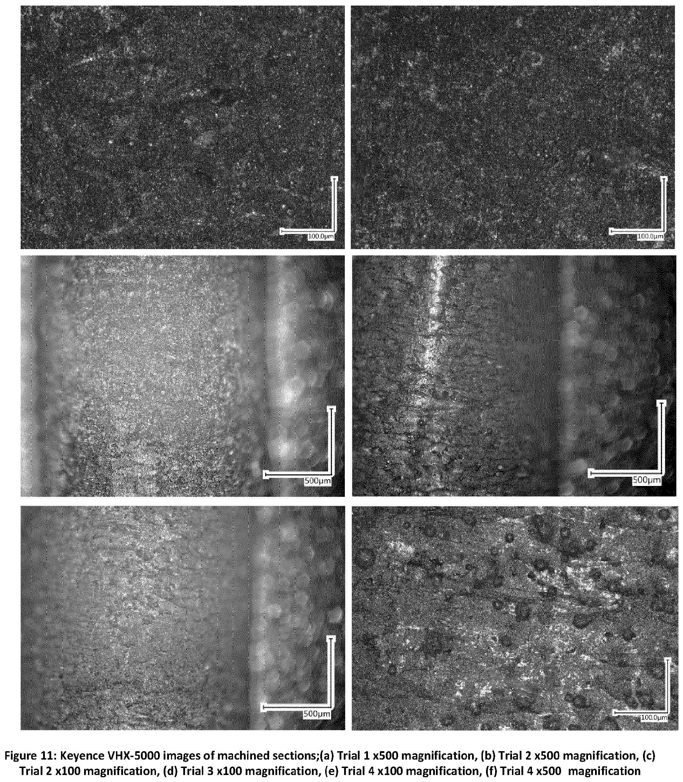

Each machined workpiece was viewed on a Keyence VHX-5000 optical microscope and images were taken at 100 times and 500 times magnification as shown in **Figures 11(a)** to **(f)****.**

In comparison to **Figure 8(b)**, it is seen in **Figures 11(a)** and **11(b)** that the ridges and balling has been greatly reduced. **Figure 11(a)** has a slightly less uniform profile from a visual standard, but both images show a reduction in the surface abnormalities. This reduction can again be seen in comparing **Figure 8(a)** **and** **Figure 6c**, where the trial at 0.4A and 0.05 mm/s has greatly improved the surface profile. **Figure 11(d)**, showing the trial at 0.2A and 0.15mm/s shows little visible difference to the original sample workpiece. When looking at the process parameters, it was found that the machining current was not reached until halfway into the machining process, with a much smaller current being passed prior to this. This reduced current can explain the lack of visual improvement, with reduced material removal. However, as the surface roughness value measured indicates an improvement over the original, some machining has been performed but unlike Trials 1 and 2, the surface abnormalities have not been completely removed. **Figures 11(e) and 11(f)** again show that the process parameters used in Trial 4 were not sufficient to remove all the surface abnormalities. There is a visual improvement on the surface, especially when analysing the transitional area between the machined and non-machined areas on the workpiece. This level of material removal does correspond with the roughness values achieved, lying in between the non-machined workpiece and the workpieces produced in trials 1 and 2.

In all the machined workpieces, oxidisation can be seen on the surface. This layer could affect the roughness values achieved. A further form of chemical post-processing could be used to remove this oxide layer. An electrical discharge, or 'spark' occurred in each of the machining trials at the start of the machined section, possibly due to a metallic debris particles in the electrolyte flow forming an electrical bridge, or due to air gaps in the flow. These areas where material was removed by sparking were visible when analysing the workpieces, and were avoided when calculating the surface roughness values.

Results from this investigation show that in all the trials, the surface roughness of the Inconel 625 internal holes were improved by the Jet-ECM process. The best surface roughness improvement was found when using a working current of 0.4A and 0.05 mm/s translational speed, reducing the surface roughness from 4.986 µm Ra to 2.662 µm Ra. The results suggest that the translation velocity has a much stronger influence on the surface roughness values achieved than the current used, within the parameters studied in this investigation. Experiments performed at a translational velocity of 0.15 mm/s were unable to entirely remove the surface abnormalities, but did show improvement over the original workpiece, however one of these trials was hampered by a reduced working current.

This study suggests that Jet-ECM has the ability to alter, and improve the surface profile on the internal features of an Inconel part produced by SLM, and also other metal workpieces produced by other additive manufacturing methods.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A device for electrochemically machining a workpiece, the device comprising:
(i) an elongate device body having a first end and a second end and an electrically insulating sidewall with one or more electrolyte delivery apertures defined in the elongate device body;
(ii) an electrode within the device body;
(iii) an electrolyte supply arrangement that confines electrolyte within the device body so that the electrolyte can only be delivered through the aperture(s) for electrochemically machining the workpiece.

2. A device according to Claim 1 wherein the device is resiliently deformable, so that in use, it can flex without permanently deforming/kinking.

3. A device according to any of the preceding claims wherein at least one electrolyte delivery aperture is defined in the sidewall so that electrolyte exits to the side of the elongate device body at a position intermediate the first end and the second end.

4. A device according to any of the preceding claims wherein the sidewall of the device body is formed by an electrically insulating outer tubular sheath.

5. A device according to any of the preceding claims wherein the elongate body is configured for machining the internal surface of a bore defined in a workpiece, for example a tubular workpiece.

6. A device according to any of the preceding claims wherein the electrode within the device body is a tubular electrode defined by an annular sidewall.

7. A device according to any of the preceding claims wherein the electrode is reticulated, optionally in a mesh form for example in a reticulated tubular form.

8. A device according to any of the preceding claims comprising an electrolyte outlet for allowing electrolyte, for example electrolyte within the workpiece, to be drawn out.

9. A device according to any of the preceding claims wherein the electrolyte supply arrangement is for supplying positive or negative pressure to the electrolyte to allow the electrolyte to be supplied to and then drawn out of the device so as to provide a continuous supply of electrolyte.

10. A device according to any preceding claim further comprising an electrically insulating inner sidewall, wherein the electrode is located between the inner sidewall and the outer sidewall; and/or
wherein the electrode is a negative electrode; and/or
wherein the device further comprises a control system for controlling the rate of delivery of the electrolyte; and/or
wherein the device further comprises a control system for controlling the rate of movement of the device within a workpiece.

11. A device according to any preceding claim wherein the workpiece is made by additive manufacturing, such as 3D printing.

12. A device according to any preceding claim for electrochemically machining the internal surface of a bore defined in a tubular workpiece, the device comprising:
(i) an electrically conductive tubular electrode having an annular sidewall defining a hollow conduit;
(ii) an electrically insulating outer tubular sheath having an annular sidewall defining a hollow conduit, the sidewall of the outer tubular sheath annular overfitted to the annular sidewall of the electrically conductive tubular electrode so that the tubular electrode is within the hollow conduit of the outer tubular sheath;
(iii) an electrolyte intake for supplying electrolyte to the hollow conduit of the tubular electrode; and
(iv) one or more apertures defined in the annular sidewall of the outer tubular sheath to allow passage of electrolyte from within the hollow conduit of the tubular electrode through the annular sidewall of the outer tubular sheath, so that the electrolyte is available for electrochemically machining the internal surface of the bore defined in the tubular workpiece.

13. A device according to any preceding claim wherein at least of the first end and second end is steerable, optionally by a steering mechanism such as an anchored cable.

14. A method of electrochemically machining an internal surface of a workpiece, the method comprising the steps of:
(i) providing a device according to any preceding claim;
(ii) inserting the device into the workpiece;
(iii) delivering electrolyte only through the aperture(s) for electrochemically machining the workpiece; and
(iv) electrochemically machining the workpiece.

15. A method according to Claim 14 further comprising the step of moving the device within the workpiece to electrochemically machine the internal surface at different positions; optionally wherein the electrochemical machining is continuous while moving or the electrochemical machining is intermittent; and/or wherein the workpiece is negatively charged.
